# EUROPÄISCHE PATENTANMELDUNG

(11) **EP 1 722 110 A2**
(43) Veröffentlichungstag der Anmeldung: **15.11.2006**
(21) Anmeldenummer: 06003047.5
(22) Anmeldetag: 15.02.2006
(51) Int. Cl.: F15B 21/06, F15B 13/043

(54) **Fluidsteuerventil mit elektro-rheologischer oder magneto-rheologischer Vorsteuerung**

(30) Priorität: 11.05.2005 DE 102005021850
(71) Anmelder: Fraunhofer-Gesellschaft zur Förderung der angewandten Forschung e.V., 80686 München (DE)
(72) Erfinder: Noack, Steffen, 09633 Halsbrücke (DE); Drossel, Welf-Guntram, 09599 Freiberg (DE); Riedel, Mathias, 02923 Horka (DE)
(74) Vertreter: Grünecker, Kinkeldey, Stockmair & Schwanhäusser Anwaltssozietät

(57) **Zusammenfassung**

Vorgesteuertes Fluidsteuerventil und Verfahren zur Steuerung eines Haupt-Fluidstroms (12), wobei ein Steuerschieber (1) durch ein Steuerfluid (13) in einem Ventilgehäuse (3) verschiebbar ist, das Steuerfluid ein elektro-rheologisches oder magnetorheologisches Fluid ist und das Steuerfluid in Abhängigkeit eines elektrischen oder magnetischen Feldes, das auf das Steuerfluid aufgebracht wird, gesteuert wird.

## Beschreibung

Die vorliegende Erfindung betrifft ein vorgesteuertes Fluidsteuerventil mit einem Steuerschieber zur Steuerung eines Haupt-Fluidstroms, wobei der Steuerschieber in Abhängigkeit eines Steuerfluides in einem Ventilgehäuse verschiebbar ist und ein Verfahren zur Steuerung eines Haupt-Fluidstroms durch ein vorgesteuertes Fluidsteuerventil mit einem Steuerschieber, wobei der Steuerschieber in Abhängigkeit eines Steuerfluides in einem Ventilgehäuse des Fluidsteuerventils verschiebbar ist zur Steuerung des Haupt-Fluidstroms.

Zur Steuerung von relativ großen Fluidströmen sind vorgesteuerte Ventile bekannt, die mindestens eine Hauptstufe sowie eine oder mehrere Vorsteuerstufen umfassen. Bei einem ersten Typ von Fluidsteuerventilen erfolgt der Antrieb der Vorsteuerstufe über ein Magnetsystem. Diese Ventile sind oft zweistufig ausgeführt. Derartige Ventile sind als Proportional- Wegeventile, Regelventile oder High-Response-Regelventile bekannt. Ein weiterer Typ von Fluidsteuerventilen ist mit einem Antrieb der Vorsteuerstufe über einen sogenannten Torque-Motor mit einem Düse-Prallplattensystem ausgeführt. Diese Ventile sind meist zwei- bis vierstufig ausgeführt und als Servoventile bekannt.

Die Dynamik derartiger vorgesteuerter Fluidventile wird durch eine hohe Zeitkonstante des Magnetsystems bzw. mehrstufige Vorsteuersysteme begrenzt. Der Volumenstrom durch den Hauptsteuerschieber und damit auch der angeschlossene hydraulische Antrieb unterliegen der eingeschränkten Dynamik derartiger vorgesteuerter Ventile.

Durch zusätzliche regelungstechnische Maßnahmen lassen sich bei den bekannten Ventilen das durch die Zeitkonstante gegebene dynamische Verhalten nur bedingt verbessern. Bei bekannten vorgesteuerten Ventilen kann für Nennvolumenströme ab 100 Liter/min bei Δp =10bar eine Grenzfrequenz von maximal 100 Hz bei kleinen Hauptkolbenschieberauslenkungen realisiert werden. Bei höheren Kolbenauslenkungen verringert sich diese Grenzfrequenz entscheidend. Bei hydraulischen Antrieben mit großer Zylinder-Eigenfrequenz wird die Dynamik der Steuerung durch die Grenzfrequenz der verwendeten vorgesteuerten Fluidventile begrenzt.

Weiterhin weisen die bekannten vorgesteuerten Fluidventile eine Mehrzahl an beweglichen Teilen auf, so dass, neben dem Fertigungsaufwand und hohen Anforderungen an das Betriebsmedium, eine intensive Wartung erforderlich ist, und mit einer erhöhten Ausfallwahrscheinlichkeit der genannten Ventile zu rechnen ist.

Es ist die Aufgabe der vorliegenden Erfindung, ein vorgesteuertes Fluidsteuerventil sowie ein Verfahren zur Steuerung eines Haupt-Fluidstroms durch ein vorgesteuertes Fluidsteuerventil der jeweils eingangs genannten Art anzugeben, wobei in einfacher und zuverlässiger Weise eine hohe Steuerdynamik des Ventils erreicht werden kann.

Gemäß dem Vorrichtungsaspekt wird die genannte Aufgabe erfindungsgemäß gelöst durch ein vorgesteuertes Fluidsteuerventil mit einem Steuerschieber eingangs genannten Art wobei das Steuerfluid ein elektro-rheologisches oder magneto-rheologisches Fluid ist und das Steuerfluid in Abhängigkeit eines elektrischen oder magnetischen Feldes, das auf das Steuerfluid aufgebracht wird, steuerbar ist.

Mit dem erfindungsgemäßen vorgesteuerten Fluidsteuerventil wird die Grenzfrequenz der Steuerung entscheidend erhöht. Durch die Reduzierung der bewegten Teile im Ventil wird die Ausfallsicherheit entscheidend verbessert. Weiterhin kann das erfindungsgemäße Fluidsteuerventil in einfacher Weise in bestehenden Hydraulikkreisläufen nachgerüstet werden.

In bevorzugter Weise ist eine Steuereinrichtung zur Steuerung eines Steuerdruckes und/oder eines Steuerfluidstromes des Steuerfluides vorgesehen.

Gemäß einem bevorzugten Ausführungsbeispiel ist zumindest eine Steuerfläche vorgesehen, die mit dem Steuerdruck eines Steuerfluides beaufschlagbar ist, und die mit dem Steuerschieber verbunden ist, wobei der Steuerschieber in Abhängigkeit des Steuerdruckes des Steuerfluides auf die Steuerfläche axial in einem Ventilgehäuse verschiebbar ist.

In bevorzugter Weise sind eine erste Steuerfläche und eine zweite Steuerfläche vorgesehen, die in entgegengesetzter Kraftrichtung auf den Steuerschieber wirken.

Gemäß einem bevorzugten Ausführungsbeispiel sind die erste und zweite Steuerfläche gleich groß.

In bevorzugter Weise ist die erste und zweite Steuerfläche jeweils auf einem ersten und zweiten Kolbenabschnitt ausgebildet, wobei der erste und der zweite Kolbenabschnitt jeweils verschiebbar in dem Ventilgehäuse gelagert ist und jeweils eine erste und eine zweite Druckkammer begrenzt.

Gemäß einem bevorzugten Ausführungsbeispiel ist die erste und die zweite Druckkammer jeweils mit einer Steuerfluiddruckversorgungseinrichtung verbunden.

In bevorzugter Weise weist die Steuereinrichtung zur Steuerung des Steuerdruckes und/oder des Steuerfluidstromes des Steuertluides druckseitige und auslassseitige Strömungswiderstände auf, die in Verbindungsleitungen zwischen der ersten und der zweiten Druckkammer und der Steuerfluiddruckversorgungseinrichtung vorgesehen sind, wobei eine Viskosität des elektro-rheologischen oder magneto-rheologischen Fluides in den Strömungswiderständen durch ein elektrisches oder magnetisches Feld steuerbar ist.

In bevorzugter Weise ist die erste Druckkammer mit einem ersten druckseitigen Strömungswiderstand und einem ersten auslassseitigen Strömungswiderstand verbunden und die zweite Druckkammer mit einem zweiten druckseitigen Strömungswiderstand und einem zweiten auslassseitigen Strömungswiderstand verbunden, wobei die druckseitigen Strömungswiderstände mit der Steuerfluiddruckversorgungseinrichtung verbunden sind, und die auslassseitigen Strömungswiderstände mit einem Auslasstank verbunden sind.

In bevorzugter Weise ist der erste druckseitige Strömungswiderstand und der zweite auslassseitige Strömungswiderstand mit einer ersten Strömungswiderstandsteuervorichtung verbunden und der zweite druckseitige Strömungswiderstand und der erste auslassseitige Strömungswiderstand ist mit einer zweiten Strömungswiderstandsteuervorichtung verbunden.

Gemäß einem bevorzugten Ausführungsbeispiel ist der erste und der zweite Kolbenabschnitt jeweils mit dem Steuerschieber verbunden.

Gemäß dem bevorzugten Ausführungsbeispiel sind der erste und der zweite Kolbenabschnitt und der Steuerschieber als einstückiges Bauteil ausgebildet.

Gemäß einem bevorzugten Ausführungsbeispiel ist jeweils ein Ringspalt zwischen dem ersten Kolbenabschnitt und dem Ventilgehäuse und zwischen dem zweiten Kolbenabschnitt und dem Ventilgehäuse vorgesehen, wobei eine Viskosität des elektro-rheologischen oder magneto-rheologischen Fluides in den Ringspalten durch ein elektrisches oder magnetisches Feld steuerbar ist.

Gemäß dem Verfahrensaspekt wird die genannte Aufgabe erfindungsgemäß gelöst durch ein Verfahren zur Steuerung eines Haupt-Fluidstroms durch ein vorgesteuertes Fluidsteuerventil mit einem Steuerschieber der eingangs genannten Art, wobei das Steuerfluid ein elektro-rheologisches oder magneto-rheologisches Fluid ist und das Steuerfluid in Abhängigkeit eines elektrischen oder magnetischen Feldes, das auf das Steuerfluid aufgebracht wird, gesteuert wird.

In bevorzugter Weise wird ein Steuerdruck und/oder ein Steuerfluidstrom des Steuerfluides gesteuert.

In bevorzugter Weise ist eine erste und eine zweite Druckkammer vorgesehen, die in entgegengesetzten Richtungen auf den Steuerschieber wirken, um die axiale Verschiebung des Steuerschiebers zu steuern, wobei die erste Druckkammer mit einem ersten druckseitigen Strömungswiderstand und einem ersten auslassseitigen Strömungswiderstand verbunden ist und die zweite Druckkammer mit einem zweiten druckseitigen Strömungswiderstand und einem zweiten auslassseitigen Strömungswiderstand verbunden ist, wobei die druckseitigen Strömungswiderstände mit einer Steuerfluiddruckversorgungseinrichtung verbunden sind, und die auslassseitigen Strömungswiderstände mit einem Auslasstank verbunden sind, und eine Viskosität des elektro-rheologisches oder magneto-rheologisches Fluid in den Strömungswiderständen durch ein elektrisches oder magnetisches Feld gesteuert wird, um den Zustrom und den Abstrom von Steuerfluid zu und von der ersten und der zweiten Druckkammer zu steuern.

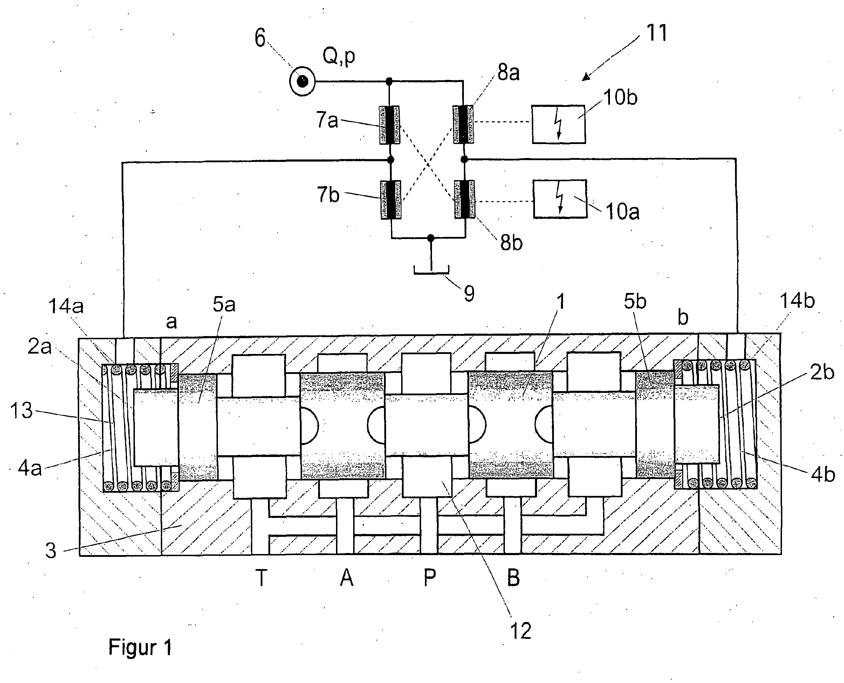

Nachfolgend wird die vorliegende Erfindung anhand eines Ausführungsbeispiels mit Bezug auf die beigefügte Zeichnung näher beschrieben und erläutert. Dabei zeigt die Fig. 1 den schematischen Aufbau eines Ausführungsbeispiels des vorgesteuerten Fluidsteuerventils.

Das vorgesteuerte Fluidsteuerventil gemäß dem Ausführungsbeispiel umfasst ein Ventilgehäuse 3, in dem ein Steuerschieber 1 axial bewegbar gelagert ist. Der Steuerschieber umfasst Steuerkanten, die mit entsprechenden Bohrungen im Gehäuse zusammenwirken, um einen Hauptfluidstrom zu steuern. An dem Ventilgehäuse sind Anschlüsse A und B vorgesehen, die in bekannter Weise dem Hauptfluidstrom zugeordnet sind. Weiterhin ist ein Druckanschluss P und ein Tankanschluss T vorgesehen. Der Schieber ist axial bewegbar, wobei in Abhängigkeit der Position des Steuerschiebers 1 die genannten Anschlüsse miteinander kommunizieren bzw. voneinander getrennt sind. Ein derartiges Fluidsteuerventil wird zur Steuerung oder Regelung eines Haupt-Fluidstromes 12, beispielsweise für einen hydraulischen Antrieb mit wechselnder Antriebsrichtung verwendet. Das Fluidsteuerventil gemäß dem Ausführungsbeispiel ist als Hauptstufe zur hydraulischen Steuerung bzw. Regelung eines hydraulischen Verbrauchers ausgebildet. Diese Hauptstufe umfasst eine Steuereinrichtung 11 zur hydraulischen Steuerung des Ventils, wie dies nachfolgend noch im Detail erläutert wird.

Wie in der Fig. 1 gezeigt, sind an gegenüberliegenden Seiten des Steuerschiebers 1 jeweils Kolbenabschnitte 5a, 5b vorgesehen. Ein erster Kolbenabschnitt 5a ist mit einer ersten Steuerfläche 2a versehen, während ein zweiter Kolbenabschnitt 5b mit einer zweiten Steuerfläche 2b versehen ist. Diese Kolbenabschnitte sind jeweils verschiebbar in dem Ventilgehäuse gelagert und bilden zusammen mit den jeweiligen Abschnitten des Ventilgehäuses jeweils eine erste Druckkammer 4a und eine zweite Druckkammer 4b, die, wie in Fig. 1 gezeigt, einander gegenüberliegen. Beide Druckkammern 4a und 4b sind mit einer Steuerfluiddruckversorgungseinrichtung 6 verbunden. Diese Steuerfluiddruckversorgungseinrichtung 6 führt ein Steuerfluid mit entsprechendem Druck p und hinreichenden Volumenstrom Q der ersten und der zweiten Druckkammer 4a, 4b zu.

Der Steuerschieber 1 wird durch zwei Federn 14a und 14b in dem Ventilgehäuse 3 in einer vorgegebenen Position gehalten. Diese Federn 14a, 14b wirken in entgegengesetzten Richtungen auf den Steuerschieber 3. Bei einem vorgesteuerten Fluidsteuerventil gemäß dem Ausführungsbeispiel sind die Federn 14a, 14b jeweils links und rechts des Hauptsteuerschiebers angebracht. Beide Federn 14a, 14b sind üblicherweise gleich groß. Diese Federn 14a, 14b bewirken eine Federzentrierung der Hauptstufe bei inaktivem Pilotventil oder fehlendem Steuerdruck. Weiterhin beeinflusst die spezielle Konfiguration dieser Federn14a, 14b in Wechselwirkung mit dem Steuerdruck das Bewegungsverhalten des Steuerschiebers 3 der Hauptstufe, um eine bestimmten Position des Steuerschiebers 3 zu erhalten.

Die Bewegung des Steuerschiebers 1 wird durch die Druckdifferenz zwischen der ersten Druckkammer 4a und der zweiten Druckkammer 4b in Abhängigkeit der Größenverhältnisse der ersten Steuerfläche 2a zur zweiten Steuerfläche 2b sowie der Steifigkeit der jeweiligen Feder 14a, 14b bestimmt. In dem gezeigten Ausführungsbeispiel sind die erste und zweite Steuerfläche 2a, 2b gleich groß, so dass die Bewegung des Steuerschiebers 1, insbesondere dessen stationäre Position, direkt proportional zu der genannten Druckdifferenz zwischen der ersten und zweiten Druckkammer 4a, 4b ist. Alternativ zu dem beschriebenen Ausführungsbeispiel können die Steuerflächen an den Kolbenabschnitten unterschiedlich groß ausgebildet werden, so dass sich bei symmetrischer Druckansteuerung der ersten und zweiten Druckkammer ein entsprechendes asymmetrisches Bewegungsverhalten des Steuerschiebers ergibt. Insbesondere ist die Auslenkung des Steuerschiebers aus der Mittellage, die bewirkt wird durch einen erhöhten Druck in der Druckkammer mit der großen Steuerfläche größer als die Auslenkung des Steuerschiebers in Gegenrichtung, die durch denselben Druck in der gegenüberliegenden Kammer bewirkt wird.

In dem gezeigten Ausführungsbeispiel ist der Steuerschieber 1 starr mit dem ersten Kolbenabschnitt 5a und dem zweiten Kolbenabschnitt 5b verbunden. Insbesondere sind die Kolbenabschnitte 5a, 5b integral an dem Steuerschieber 1 ausgebildet. Diese starre Ausbildung des Steuerschiebers ermöglicht eine schnelle Reaktion auf Druckänderungen in den Druckkammern, die unmittelbar auf den Steuerschieber 1 übertragen wird.

Zur Steuerung der Druckdifferenz zwischen der ersten Druckkammer 4a und der zweiten Druckkammer 4b ist die Steuereinrichtung 11 vorgesehen. Diese Steuereinrichtung ist mit der Steuerfluiddruckversorgungseinrichtung 6 verbunden, wobei diese im wesentlichen eine hydraulische Pumpe umfasst, die zur Zuführung des Steuerfluids mit entsprechendem Druck p und hinreichenden Volumenstrom Q zu der ersten und zweiten Druckkammer 4a, 4b vorgesehen ist.

Die Steuereinrichtung 11 besteht im wesentlichen aus einer Brückenschaltung von Strömungswiderständen 7a,7b,8a,8b, die so geschaltet sind, dass die erste und die zweite Druckkammer 4a, 4b wechselseitig mit der Steuerfluiddruckversorgungseinrichtung 6 bzw. dem Tank 9 verbindbar sind, wie dies in Fig. 1 gezeigt ist. Diese Strömungswiderstände umfassen einen ersten druckseitigen Strömungswiderstand 7a und einen zweiten druckseitigen Strömungswiderstand 8a. Die Eingänge dieser druckseitigen Strömungswiderstände 7a, 8a sind gemeinsam mit der Steuerfluiddruckversorgungseinrichtung 6 verbunden. Der Ausgang des ersten druckseitigen Strömungswiderstandes 7a ist über eine Hydraulikleitung mit der ersten Druckkammer 4a verbunden. Der Ausgang des zweiten druckseitigen Strömungswiderstandes 8a ist über eine Hydraulikleitung mit der zweiten Druckkammer 4b verbunden. Weiterhin sind auslaßseitige Strömungswiderstände 7b, 8b vorgesehen. Die einlaßseitigen Enden dieser auslaßseitigen Strömungswiderstände 7b, 8b sind jeweils mit den Hydraulikleitungen stromab der druckseitigen Strömungswiderstände 7a, 8a verbunden. Wie in dem Ausführungsbeispiel von Fig. 1 gezeigt, ist der Einlaß des ersten auslaßseitigen Strömungswiderstandes 7b mit der Hydraulikleitung verbunden, die den Auslaß des ersten druckseitigen Strömungswiderstandes 7a mit der ersten Druckkammer 4a verbindet. Entsprechend ist der Einlaß des auslaßseitigen Strömungswiderstandes 8a mit der Hydraulikleitung verbunden, die den Auslaß des zweiten druckseitigen Strömungswiderstandes 8a mit der zweiten Druckkammer 4b verbindet. Die Auslässe des ersten und des zweiten auslaßseitigen Strömungswiderstandes 7b, 8b sind gemeinsam mit einem drucklosen Anschluß, insbesondere einem Tank 9, verbunden, wobei dieser Tank 9 im wesentlichen als drucklose Rückführung für das Steuerfluid 13 zu der Steuerfluiddruckversorgungseinrichtung 6 dient.

Die genannten Strömungswiderstände 7a, 8a, 7b, 8b sind steuerbar, wie dies nachfolgend noch erläutert wird. Durch die Steuerung dieser Strömungswiderstände 7a,7b,8a,8b wird der Strömungswiderstand in den Verbindungsleitungen zwischen den Druckkammern 4a, 4b und der Druckversorgungseinrichtung 6 verändert, so dass eine entsprechende Druckdifferenz in den Druckkammern 4a und 4b erzeugt werden kann. Wie in Fig. 1 durch die Strichlinie angedeutet, sind die Strömungswiderstände jeweils paarweise steuerbar. In dem gezeigten Ausführungsbeispiel ist der erste druckseitige Strömungswiderstand 7a steuerungstechnisch mit dem zweiten auslaßseitigen Strömungswiderstand 8b verbunden, während der zweite druckseitige Strömungswiderstand 8a steuerungstechnisch mit dem ersten auslaßseitigen Strömungswiderstand 7b verbunden ist.

Gemäß dem Ausführungsbeispiel wird als Steuerfluid ein elektro-rheologisches oder magneto-rheologisches Fluid 13 verwendet. Ein derartiges Fluid ändert seine Viskosität in Abhängigkeit eines auf dieses Fluid wirkendes elektrisches oder magnetisches Feld. Die Reaktionszeiten derartiger Fluide 13 auf Feldänderungen liegt unter 1 ms.

Die Strömungswiderstände 7a, 7b, 8a, 8b sind derart ausgebildet, dass sie entsprechend dem verwendeten elektro-rheologischen oder magneto-rheologischen Fluid ein elektrisches oder magnetisches Feld auf dieses Fluid 13 ausüben können. Diese Widerstände sind somit als sogenannte elektro-rheologische Widerstände (ER-Strömungswiderstände) oder magneto-rheologische Strömungswiderständ (MR-Strömungswiderstände) ausgebildet. Wird bei dem gezeigten Ausführungsbeispiel durch die Strömungswiderstände 7a, 7b, 8a, 8b ein entsprechendes elektrisches oder magnetisches Feld auf das elektro-rheologische oder magneto-rheologische Fluid 13 aufgebracht, so erhöht sich die Viskosität dieses Steuerfluids 13 derart, dass der Strömungswiderstand ansteigt, wobei in Abhängigkeit der wirkenden Feldstärke ein vollständiger Verschluß der jeweiligen hydraulischen Leitung in der Steuereinrichtung 11 erreicht werden kann.

Wie in der Fig. 1 des Ausführungsbeispiels gezeigt, ist eine erste und eine zweite Strömungswiderstandsteuervorrichtung 10a, 10b zur Ansteuerung der elektro-rheologischen oder magneto-rheologischen Strömungswiderstände 7a, 7b, 8a, 8b vorgesehen. Gemäß dem Ausführungsbeispiel ist eine erste Strömungswiderstandsteuervorrichtung 10a mit dem ersten Paar Strömungswiderstände, bestehend aus dem ersten druckseitigen Strömungswiderstand 7a und dem zweiten auslaßseitigen Strömungswiderstand 8b steuerungstechnisch verbunden. Eine zweite Strömungswiderstandsteuervorrichtung 10b ist entsprechend mit dem zweiten Paar Strömungswiderstände, bestehend aus dem zweiten druckseitigen Strömungswiderstand 8a und dem ersten auslaßseitigen Strömungswiderstand 7b steuerungstechnisch verbunden. Diese steuerungstechnische Verbindung bzw. Verschaltung der Strömungswiderstandsteuervorrichtungen 10a, 10b mit den Strömungswiderständen 7a, 7b, 8a, 8b bildet eine sogenannte Brückenschaltung zur Steuerung der Druckdifferenz zwischen der ersten und zweiten Druckkkammer 4a, 4b. In dem gezeigten Ausführungsbeispiel für elektro-rheologische Fluide sind die Strömungswiderstandsteuervorrichtungen im wesentlichen als Hochspannungsverstärker ausgebildet.

Weiterhin ist in dem beschriebenen Ausführungsbeispiel ein in Fig. 1 nicht gezeigtes Meßsystem vorgesehen, um die Position des Steuerschiebers 1 zu bestimmen. Durch die Positionsbestimmung des Steuerschiebers 1 und einem entsprechenden Soll-Ist-Vergleich und eine entsprechende Regeleinrichtung kann die Bewegung des Steuerschiebers 1 und damit der Hauptvolumenstrom durch das Fluidsteuerventil geregelt werden. Diese Regeleinrichtung ist vorgesehen, um die Strömungswiderstandsteuervorrichtungen 10a und 10b entsprechend der Position des Steuerschiebers 1 anzusteuern, um diesen Steuerschieber 1 in eine gewünschte (Soll) Position zu bringen. Alternativ dazu kann als Regelgröße auch der Druck oder Volumenstrom des Hauptfluides 12 verwendet werden.

Alternativ dazu kann als Regelgröße auch der Druck in den beiden Kammern 4a, 4b erfaßt und in einer angepaßten Regeleinrichtung verarbeitet werden, oder es kann eine Kombination beider Varianten genutzt werden.

In dem gezeigten Ausführungsbeispiel wird der Druck des Steuerfluides 13 durch einen separaten Druckerzeuger, beispielsweise eine Pumpe, erzeugt, d.h. unabhängig von dem Druck und Volumenstrom des Hauptfluides am Anschluß P des Fluidsteuerventils. Die beiden Hydraulikkreisläufe, d.h. der Hauptfluidkreislauf und der Steuerfluidkreislauf, sind voneinander getrennt. Das Steuerfluid13 fließt dabei in einen Kreislauf, bestehend aus einer Pumpe, den Strömungswiderständen und Leitungen, den Druckkammern und dem Tank. Das Hauptfluid 12 durchströmt das Fluidsteuerventil entsprechend der Anschlüsse A, B, P und T.

Bei dem gezeigten Ausführungsbeispiel sind die Kolbenabschnitte 5a, 5b jeweils starr mit dem Steuerschieber 1 verbunden bzw. als Integralbauteil mit dem Steuerschieber 1 ausgebildet. Alternativ zu dieser starren Verbindung kann das Fluidsteuerventil entsprechend abgewandelt werden, derart, dass die Übertragung der Bewegung des jeweiligen Kolbenabschnitts auf den Steuerschieber über eine hydraulische Verbindung erfolgt. Eine derartige hydraulische Verbindung weist eine gewisse Elastitzität auf, so dass ein entsprechendes Schwingungsverhalten mit einer entsprechenden Dämpfung vorliegt. Wird als Übertragungsfluid für eine derartige Verbindung ebenfalls ein elektro-rheologisches oder magneto-rheologisches Fluid verwendet, so kann in entsprechender Weise über eine Steuerung eines elektrischen oder magnetischen Feldes das Schwingungsverhalten der Übertragung gesteuert werden.

Bei dem gezeigten Ausführungsbeispiel sind die Kolbenabschnitte 5a, 5b jeweils verschiebbar in dem Ventilgehäuse 3 gelagert und bilden zusammen mit den jeweiligen Abschnitten des Ventilgehäuses jeweils die erste Druckkammer 4a und die zweite Druckkammer 4b. Diese Kolbenabschnitte 5a, 5b weisen Dichtungen auf um die Druckkammer 4a,4b abzudichten. Alternativ zu diesem Ausführungsbeispiel kann jeweils ein Ringspalt zwischen den Kolbenabschnitten 5a, 5b und dem Ventilgehäuse 3 ausgebildet werden. Diese Ringspalte werden entsprechend mit einem elektrischen oder magnetischen Feld beaufschlagt, um dadurch Abdichtung zwischen Haupt-Fluidkreislauf und Steuerfluidkreislauf zu erzielen. Dabei kann auf die konventionellen Dichtungen weitgehend verzichtet werden.

Nachfolgend wird eine Betriebsweise des vorgesteuerten Fluidsteuerventils gemäß dem Ausführungsbeispiel nach Fig. 1 beschrieben. Wie bereits erläutert, wird die Position des Steuerschiebers 1 maßgeblich durch die Druckdifferenz zwischen der ersten Druckkammer 4a und der zweiten Druckkammer 4b bestimmt. Diese Druckdifferenz wird durch entsprechende Ansteuerung der vorgenannten Strömungswiderstände 7a, 7b, 8a, 8b erzeugt.

Um den Druck des Steuerfluides 13 in der ersten Druckkammer 4a zu erhöhen und gleichzeitig den Druck des Steuerfluides 13 in der zweiten Druckkammer 4b abzusenken, werden der zweite druckseitige Strömungswiderstand 8a und der erste auslaßseitige Strömungswiderstand 7b durch die zweite Strömungswiderstandsteuervorrichtung 10b angesteuert. Durch das aufgebrachte elektrische bzw. magnetische Feld in den genannten Strömungswiderständen 8a und 7b erhöht sich die Viskosität des Steuerfluides 13 in diesen Widerständen schlagartig, so dass im wesentlichen kein Steuerfluidstrom durch die Widerstände 8a und 7b erfolgt. Somit ist die Druckverbindung zwischen der Druckversorgungseinrichtung 6 und der zweiten Druckkammer 4b unterbrochen, und die Verbindung der ersten Druckkammer 4a zu dem drucklosen Tank 9 ist ebenfalls unterbrochen.

Gleichzeitig wird auf die weiteren Strömungswiderstände, d.h. dem ersten druckseitigen Strömungswiderstand 7a und dem zweiten auslassseitigen Strömungswiderstand 8b kein Feld aufgebracht, so dass die Druckversorgungseinrichtung 6 mit der ersten Druckkammer 4a verbunden ist, während die zweite Druckkammer 4b mit dem drucklosen Tank 9 verbunden ist. Daraus ergibt sich eine Druckdifferenz zwischen der ersten Druckkammer 4a und der zweiten Druckkammer 4b derart, dass der Steuerschieber bezüglich der in Fig. 1 gezeigten Darstellung nach rechts verschoben wird und entsprechend eine Verbindung zwischen dem Druckanschluß P und dem Strömungsanschluß B in dem Fluidsteuerventil freigibt.

Zur Bewegung des Steuerschiebers 1 in die Gegenrichtung (d.h. nach links gemäß der Darstellung in Fig. 1) werden die Strömungswiderstände in entsprechend entgegengesetzter Weise angesteuert, d.h. das elektrische oder magnetische Feld wird durch den ersten druckseitigen Strömungswiderstand 7a und den zweiten auslaßseitigen Strömungswiderstand 8b aufgebracht, während der zweite druckseitige Strömungswiderstand 8a und der erste auslaßseitige Strömungswiderstand 7b kein entsprechendes Feld aufbringen.

Bei dieser Betriebsweise des vorgesteuerten Fluidsteuerventils gemäß dem Ausführungsbeispiel wird ein Schaltverhalten realisiert, bei dem nur die Zustände "offen" und "gesperrt" der Strömungswiderstände verwendet werden. Alternativ dazu kann das vorgesteuerte Fluidsteuerventil gemäß dem Ausführungsbeispiel auch als Stetigventil betrieben werden. Dabei werden beliebige Druckdifferenzen gezielt auf die Steuerflächen 5a, 5b geben. Zu diesem Zweck ist die Brückenschaltung der Strömungswiderstände aufgebaut. Von der Steuerfluidversorgung, die auf einen festen Druck eingestellt ist, fließt ein Volumenstrom über die Strömungswiderstände 7a,7b bzw. 8a, 8b zum Tank. Beim Durchströmen der Strömungswiderstände entsteht ein Druckgefälle über denselben. Dieses Druckgefälle hängt von der Größe der Feldstärke am Strömungswiderstand und dem Volumenstrom durch ihn ab. Dadurch steht an der Verbindungsstelle der Strömungswiderstände, die mit den Druckkammern 4a bzw. 4b verbunden sind, ein Druck an, dessen Größe sich aus dem Druck der Steuerfluidversorgung und dem Verhältnis des Strömungswiderstandes 7b bzw. 8b zum Gesamtwiderstand 7a+7b bzw. 8a+8b ergibt. Durch die gegensinnige Ansteuerung der Strömungswiderstände kann man desha einen beliebigen Druck zwischen Druck der Steuerölversorgung und Tankdruck (Null) einstellen, wobei eine Kammer oberhalb des Mittendruckes, die andere Kammer entsprechen unterhalb des Mittendruckes beaufschlagt wird. Aus der weiter oben genannten Funktionsweise ergibt sich dadurch eine bestimmte Steuerschieberposition außerhalb der Mittelstellung.

Bei dem vorgesteuerten Fluidsteuerventil gemäß dem Ausführungsbeispiel wird der Steuerschieber nicht, wie bei herkömmlichen vorgesteuerten Ventilen, mit einer oder mehreren hydromechanischen Vorsteuerstufen bewegt, sondern direkt über eine Anordnung von ER- bzw. MR-Strömungswiderständen gesteuert. Das elektro-rheologische oder magneto-rheologische Steuerfluid strömt in einem separaten Kreislauf. Gemäß dem Ausführungsbeispiel ist der Haupthydraulikfluidstrom von dem elektro-rheologischen oder magneto-rheologischen Steuerfluidstrom durch ein entsprechendes Dichtungssystem getrennt.

Durch eine Pumpe der Steuerfluiddruckversorgungseinrichtung 6 wird das Steuerfluid gefördert und durchströmt die den Druckkammern vorgelagerten Strömungswiderstände. In Abhängigkeit von den in den ER- bzw. MR-Strömungswiderständen vorherrschenden Feldstärke lässt sich ein definierter Druckabfall über diese einstellen. Durch die Anordnung der genannten Strömungswiderstände gemäß dem Ausführungsbeispiel lässt sich über die angesteuerte Feldstärke eine definierte Druckdifferenz zwischen den beiden Druckkammern einstellen. Der Steuerschieber bewegt sich in Abhängigkeit von der Druckdifferenz zwischen den beiden Druckkammern.

Das voran erwähnte Meßsystem bestimmt die Position des Steuerschiebers, und mit Hilfe einer Regeleinrichtung werden die ER- bzw. MR-Strömungswiderstände so angesteuert, dass der Schieber seine Sollposition einnimmt. Die hohe Dynamik des elektro-rheologischen bzw. magneto-rheologischen Effekts lässt sich so auf die Steuerschieberbewegung und damit auf den Volumenstrom im Hauptkreislauf übertragen. Dadurch können die dynamischen Eigenschaften des vorgesteuerten Fluidsteuerventils gegenüber bekannten Ventilen verbessert werden, insbesondere wird eine höhere Grenzfrequenz erreicht.

Weiterhin wird die Ausfallsicherheit eines derartigen Fluidsteuerventils verbessert, da weniger bewegte und dem Verschleiß unterliegende Teile benötigt werden.

Das elektro-rheologische bzw. magneto-rheologische Fluid wird lediglich im Steuerteil des Ventils verwendet. Somit kann das vorgesteuerte Fluidsteuerventil gemäß dem Ausführungsbeispiel in bestehenden Haupthydraulikkreisläufen eingesetzt werden, ohne dass dieser primäre Kreislauf geändert oder angepaßt werden muß. Weiterhin berücksichtigt der begrenzte Einsatz des elektro-rheologischen bzw. magneto-rheologischen Fluids den relativ hohen Preis für derartige Fluide, so dass die entsprechenden Kosten gering gehalten werden können.

Das Ausführungsbeispiel zeigt ein vorgesteuertes Fluidsteuerventil mit einem Steuerschieber zur Steuerung eines Haupt-Fluidstroms, wobei der Steuerschieber durch ein Steuerfluid 13 in einem Ventilgehäuse 3 verschiebbar ist. Das Steuerfluid ist ein elektro-rheologisches oder magneto-rheologisches Fluid. Das Steuerfluid 13 ist in Abhängigkeit eines elektrischen oder magnetischen Feldes, das auf das Steuerfluid 13 aufgebracht wird, steuerbar. Eine Steuereinrichtung ist zur Steuerung eines Steuerdruckes und/oder eines Steuerfluidstromes des Steuerfluides 13 vorgesehen.

Das Ausführungsbeispiel zeigt ein vorgesteuertes Fluidsteuerventil mit zumindest einer Steuerfläche 2a, 2b, die mit einem Steuerdruck des Steuerfluides 13 beaufschlagbar ist, und die mit dem Steuerschieber 1 verbunden ist. Der Steuerschieber 1 ist in Abhängigkeit des Steuerdruckes des Steuerfluides 13 auf die Steuerfläche 2a, 2b axial in einem Ventilgehäuse 3 verschiebbar zur Steuerung des Haupt-Fluidstroms 12. Das Steuerfluid 13 ist ein elektro-rheologisches oder magneto-rheologisches Fluid und der Steuerdruck des Steuerfluides 13 ist in Abhängigkeit eines elektrischen oder magnetischen Feldes, das auf das Steuerfluid 13 aufgebracht wird, steuerbar.

In dem vorgesteuerten Fluidsteuerventil sind eine erste Steuerfläche 2a und eine zweite Steuerfläche 2b vorgesehen, die in entgegengesetzter Kraftrichtung auf den Steuerschieber 1 wirken. Die erste und zweite Steuerfläche 2a, 2b sind gleich groß. Die erste und zweite Steuerfläche 2a, 2b ist jeweils auf einem ersten und zweiten Kolbenabschnitt 5a, 5b ausgebildet. Der erste und der zweite Kolbenabschnitt 5a, 5b ist jeweils verschiebbar in dem Ventilgehäuse 3 gelagert und begrenzt jeweils eine erste und eine zweite Druckkammer 4a, 4b. Die erste und die zweite Druckkammer 4a, 4b ist jeweils mit einer Steuerfluiddruckversorgungseinrichtung 6 verbunden.

In dem Ausführungsbeispiel weist die Steuereinrichtung 11 zur Steuerung des Steuerdruckes des Steuerfluides 13 druckseitige und auslassseitige Strömungswiderstände 7a, 8a, 7b, 8b auf, die in Verbindungsleitungen zwischen der ersten und der zweiten Druckkammer 4a, 4b und der Steuerfluiddruckversorgungseinrichtung 6 vorgesehen sind. Eine Viskosität des elektro-rheologisches oder magneto-rheologisches Fluid in den Strömungswiderständen 7a, 8a, 7b, 8b ist durch ein elektrisches oder magnetisches Feld steuerbar.

Die erste Druckkammer 4a ist mit einem ersten druckseitigen Strömungswiderstand 7a und einem ersten auslassseitigen Strömungswiderstand 7b verbunden und die zweite Druckkammer 4b ist mit einem zweiten druckseitigen Strömungswiderstand 8a und einem zweiten auslassseitigen Strömungswiderstand 8b verbunden. Die druckseitigen Strömungswiderstände 7a, 8a sind mit der Steuerfluiddruckversorgungseinrichtung 6 verbunden, und die auslassseitigen Strömungswiderstände 7b, 8b sind mit einem Auslasstank 9 verbunden sind.

Der erste druckseitige Strömungswiderstand 7a und der zweite auslassseitige Strömungswiderstand 8b ist mit einer ersten Strömungswiderstandsteuervorichtung 10a verbunden und der zweite druckseitige Strömungswiderstand 8a und der erste auslassseitige Strömungswiderstand 7b ist mit einer zweiten Strömungswiderstandsteuervorichtung 10b verbunden.

In dem Ausführungsbeispiel ist der erste und der zweite Kolbenabschnitt 5a, 5b jeweils mit dem Steuerschieber 1 verbunden. Der erste und der zweite Kolbenabschnitt 5a, 5b und der Steuerschieber 1 sind als einstückiges Bauteil ausgebildet.

Alternativ zu dem gezeigten Ausführungsbeispiel ist jeweils ein Ringspalt zwischen dem ersten Kolbenabschnitt 5a und dem Ventilgehäuse 3 und zwischen dem zweiten Kolbenabschnitt 5b und dem Ventilgehäuse (3) vorgesehen. Die Viskosität des elektro-rheologischen oder magneto-rheologischen Fluides in den Ringspalten wird durch ein elektrisches oder magnetisches Feld gesteuert bzw. so stark erhöht, dass der Ringspalt fluiddicht verschlossen wird.

In Verbindung mit dem Ausführungsbeispiel ist ein Verfahren zur Steuerung eines Haupt-Fluidstroms 12 durch ein vorgesteuertes Fluidsteuerventil mit einem Steuerschieber 1 beschrieben, wobei der Steuerschieber 1 durch ein Steuerfluid 13 in einem Ventilgehäuse 3 verschiebbar ist zur Steuerung des Haupt-Fluidstroms 12. Das Steuerfluid 13 ist ein elektro-rheologisches oder magneto-rheologisches Fluid. Das Steuerfluid 13 wird in Abhängigkeit eines elektrischen oder magnetischen Feldes, das auf das Steuerfluid 13 aufgebracht wird, gesteuert. Ein Steuerdruck und/oder ein Steuerfluidstrom des Steuerfluides (13) wird gesteuert.

Gemäß diesem Verfahren zur Steuerung eines Haupt-Fluidstroms 12 durch ein vorgesteuertes Fluidsteuerventil ist eine erste und eine zweite Druckkammer 4a, 4b vorgesehen, die in entgegengesetzten Richtungen auf den Steuerschieber 1 wirken, um die axiale Verschiebung des Steuerschiebers 1 zu steuern, wobei die erste Druckkammer 4a mit einem ersten druckseitigen Strömungswiderstand 7a und einem ersten auslassseitigen Strömungswiderstand 7b verbunden ist und die zweite Druckkammer 4b mit einem zweiten druckseitigen Strömungswiderstand 8a und einem zweiten auslassseitigen Strömungswiderstand 8b verbunden ist, wobei die druckseitigen Strömungswiderstände 7a, 8a mit einer Steuerfluiddruckversorgungseinrichtung 6 verbunden sind, und die auslassseitigen Strömungswiderstände 7b, 8b mit einem Auslasstank 9 verbunden sind, und eine Viskosität des elektro-rheologisches oder magneto-rheologisches Fluid in den Strömungswiderständen 7a, 7b, 8a, 8b durch ein elektrisches oder magnetisches Feld gesteuert wird, um den Zustrom und den Abstrom von Steuerfluid 13 zu und von der ersten und der zweiten Druckkammer 4a, 4b zu steuern.

Das Ausführungsbeispiel beschreibt ein vorgesteuertes Fluidsteuerventil bei dem:
- der Steuerschieber einer Hauptstufe hydraulisch vorgesteuert wird, und zwar nicht mit dem Hauptfluid, sondern einem davon verschiedenen Steuerfluid,
- das Steuerfluid elektro-rheologisch oder magneto-rheologisch ist,
- in der Hauptstufe das Steuerfluid durch Anlegen eines konstanten Feldes Dichtfunktionen übernehmen kann,
- für die Erzeugung der Steuerdrücke eine Brückenschaltung aus Strömungswiderständen für ER- oder MR-Fluide genutzt wird, wobei die Einstellung eines Steuerdruckes über die elektrischen oder magnetischen Felder an den Strömungswiderständen erfolgt,
- die Steuerung der Strömungswiderstände auf verschiedene Weise erfolgen kann:
   a) durch separate Ansteuerung jedes der vier Strömungswiderstände,
   b) durch paarweise Ansteuerung von jeweils 2 Strömungswiderständen (wie im Text beschrieben),
- als Strategie zur Steuerung der Bewegung und Position des Haupt-Steuerschiebers folgende Varianten realisiert werden können:
   a) nur gesteuert, d.h. der Zusammenhang zwischen den Steuersignalen auf die Strömungswiderstände und der daraus resultierenden Position des Hauptsteuerschiebers ist bekannt, so dass daraus eine entsprechende Ansteuerung generieren (Problem: Hysterese und andere Positionsabweichungen),
   b) Regelung mit Messung der Istposition des Haupt-Steuerschiebers und Soll-Ist-Vergleich,
   c) Regelung mit Messung der Drücke in den Kammern 4a, 4b und Soll-Ist-Vergleich,
   d) Kombination von b) und c), z.B. als Kaskadenregler oder Mehrgrößenregler,
- die Ausführung des Steuerfluidkreislaufes kann als Kompaktversorgung in unmittelbarer Nähe der Hauptstufe erfolgen. Sie besteht aus Pumpe mit Behälter, Kühler, Druckabsicherung, eventuell Hydrospeicher sowie den Strömungswiderständen. Es kann sowohl ein offener als auch ein geschlossener Kreislauf ausgeführt werden.

## Patentansprüche

1. Vorgesteuertes Fluidsteuerventil mit einem Steuerschieber (1) zur Steuerung eines Haupt-Fluidstroms (12), wobei der Steuerschieber (1) durch ein Steuerfluid (13) in einem Ventilgehäuse (3) verschiebbar ist, **dadurch gekennzeichnet, dass** das Steuerfluid (13) ein elektro-rheologisches oder magneto-rheologisches Fluid ist und das Steuerfluid (13) in Abhängigkeit eines elektrischen oder magnetischen Feldes, das auf das Steuerfluid (13) aufgebracht wird, steuerbar ist.

2. Vorgesteuertes Fluidsteuerventil nach Anspruch 1, **gekennzeichnet durch** eine Steuereinrichtung (11) zur Steuerung eines Steuerdruckes und/oder eines Steuerfluidstromes des Steuerfluides (13).

3. Vorgesteuertes Fluidsteuerventil nach Anspruch 2, **gekennzeichnet durch** zumindest eine Steuerfläche (2a,2b), die mit dem Steuerdruck eines Steuerfluides (13) beaufschlagbar ist, und die mit dem Steuerschieber (1) verbunden ist, wobei der Steuerschieber (1) in Abhängigkeit des Steuerdruckes des Steuerfluides (13) auf die Steuerfläche (2a,2b) axial in einem Ventilgehäuse (4) verschiebbar ist.

4. Vorgesteuertes Fluidsteuerventil nach Anspruch 3, **dadurch gekennzeichnet, dass** eine erste Steuerfläche (2a) und eine zweite Steuerfläche (2b) vorgesehen sind, die in entgegengesetzter Kraftrichtung auf den Steuerschieber (1) wirken.

5. Vorgesteuertes Fluidsteuerventil nach Anspruch 4, **dadurch gekennzeichnet, dass** die erste und zweite Steuerfläche (2a,2b) gleich groß sind.

6. Vorgesteuertes Fluidsteuerventil nach Anspruch 4 oder 5, **dadurch gekennzeichnet, dass** die erste und zweite Steuerfläche (2a, 2b) jeweils auf einem ersten und zweiten Kolbenabschnitt (5a, 5b) ausgebildet ist, wobei der erste und der zweite Kolbenabschnitt (5a, 5b) jeweils verschiebbar in dem Ventilgehäuse (3) gelagert ist und jeweils eine erste und eine zweite Druckkammer (4a, 4b) begrenzt.

7. Vorgesteuertes Fluidsteuerventil nach Anspruch 6, **dadurch gekennzeichnet, dass** die erste und die zweite Druckkammer (4a, 4b) jeweils mit einer Steuerfluiddruckversorgungseinrichtung (6) verbunden ist.

8. Vorgesteuertes Fluidsteuerventil nach Anspruch 7, **dadurch gekennzeichnet, dass** die Steuereinrichtung (11) zur Steuerung des Steuerdruckes und/oder des Steuerfluidstromes des Steuerfluides (13) druckseitige und auslassseitige Strömungswiderstände (7a, 8a, 7b, 8b) aufweist, die in Verbindungsleitungen zwischen der ersten und der zweiten Druckkammer (4a, 4b) und der Steuerfluiddruckversorgungseinrichtung (6) vorgesehen sind, wobei eine Viskosität des elektro-rheologischen oder magneto-rheologischen Fluides in den Strömungswiderständen (7a, 8a, 7b, 8b) durch ein elektrisches oder magnetisches Feld steuerbar ist.

9. Vorgesteuertes Fluidsteuerventil nach Anspruch 7, **dadurch gekennzeichnet, dass** die erste Druckkammer (4a) mit einem ersten druckseitigen Strömungswiderstand (7a) und einem ersten auslassseitigen Strömungswiderstand (7b) verbunden ist und die zweite Druckkammer (4b) mit einem zweiten druckseitigen Strömungswiderstand (8a) und einem zweiten auslassseitigen Strömungswiderstand (8b) verbunden ist, wobei die druckseitigen Strömungswiderstände (7a, 8a) mit der Steuerfluiddruckversorgungseinrichtung (6) verbunden sind, und die auslassseitigen Strömungswiderstände (7b, 8b) mit einem Auslasstank (9) verbunden sind.

10. Vorgesteuertes Fluidsteuerventil nach Anspruch 9, **dadurch gekennzeichnet, dass** der erste druckseitige Strömungswiderstand (7a) und der zweite auslassseitige Strömungswiderstand (8b) mit einer ersten Strömungswiderstandsteuervorichtung (10a) verbunden ist und der zweite druckseitige Strömungswiderstand (8a) und der erste auslassseitige Strömungswiderstand (7b) mit einer zweiten Strömungswiderstandsteuervorichtung (10b) verbunden ist.

11. Vorgesteuertes Fluidsteuerventil nach zumindest einem der Ansprüche 4 bis 10, **dadurch gekennzeichnet, dass** der erste und der zweite Kolbenabschnitt (5a, 5b) jeweils mit dem Steuerschieber (1) verbunden ist.

12. Vorgesteuertes Fluidsteuerventil nach Anspruch 11, **dadurch gekennzeichnet, dass** der erste und der zweite Kolbenabschnitt (5a, 5b) und der Steuerschieber (1) als einstückiges Bauteil ausgebildet sind.

13. Vorgesteuertes Fluidsteuerventil nach zumindest einem der Ansprüche 4 bis 12, **dadurch gekennzeichnet, dass** jeweils ein Ringspalt zwischen dem ersten Kolbenabschnitt (5a) und dem Ventilgehäuse (3) und zwischen dem zweiten Kolbenabschnitt (5b) und dem Ventilgehäuse (3) vorgesehen ist, wobei eine Viskosität des elektro-rheologischen oder magneto-rheologischen Fluides in den Ringspalten durch ein elektrisches oder magnetisches Feld steuerbar ist.

14. Verfahren zur Steuerung eines Haupt-Fluidstroms (12) durch ein vorgesteuertes Fluidsteuerventil mit einem Steuerschieber (1), wobei der Steuerschieber (1) durch ein Steuerfluid (13) in einem Ventilgehäuse (3) verschiebbar ist zur Steuerung des Haupt-Fluidstroms (12), **dadurch gekennzeichnet, dass** das Steuerfluid (13) ein elektro-rheologisches oder magneto-rheologisches Fluid ist und das Steuerfluid (13) in Abhängigkeit eines elektrischen oder magnetischen Feldes, das auf das Steuerfluid (13) aufgebracht wird, gesteuert wird.

15. Verfahren zur Steuerung eines Haupt-Fluidstroms (12) durch ein vorgesteuertes Fluidsteuerventil nach Anspruch 14, **dadurch gekennzeichnet, dass** ein Steuerdruck und/oder ein Steuerfluidstrom des Steuerfluides (13) gesteuert wird.

16. Verfahren zur Steuerung eines Haupt-Fluidstroms (12) durch ein vorgesteuertes Fluidsteuerventil nach Anspruch 15, **dadurch gekennzeichnet, dass** eine erste und eine zweite Druckkammer (4a, 4b) vorgesehen ist, die in entgegengesetzten Richtungen auf den Steuerschieber (1) wirken, um eine axiale Verschiebung des Steuerschiebers (1) zu steuern, wobei die erste Druckkammer (4a) mit einem ersten druckseitigen Strömungswiderstand (7a) und einem ersten auslassseitigen Strömungswiderstand (7b) verbunden ist und die zweite Druckkammer (4b) mit einem zweiten druckseitigen Strömungswiderstand (8a) und einem zweiten auslassseitigen Strömungswiderstand (8b) verbunden ist, wobei die druckseitigen Strömungswiderstände (7a, 8a) mit einer Steuerfluiddruckversorgungseinrichtung (6) verbunden sind, und die auslassseitigen Strömungswiderstände (7b, 8b) mit einem Auslasstank (9) verbunden sind, und eine Viskosität des elektro-rheologisches oder magneto-rheologisches Fluid in den Strömungswiderständen (7a, 7b, 8a, 8b) durch ein elektrisches oder magnetisches Feld gesteuert wird, um den Zustrom und den Abstrom von Steuerfluid (13) zu und von der ersten und der zweiten Druckkammer (4a, 4b) zu steuern.
